# EUROPÄISCHE PATENTSCHRIFT

(11) **EP 2 198 352 B1**
(45) Veröffentlichungstag und Bekanntmachung des Hinweises auf die Patenterteilung: **08.06.2011**
(21) Anmeldenummer: 07819223.4
(22) Anmeldetag: 12.10.2007
(51) Int. Cl.: G05B 19/418

(54) **VERFAHREN ZUM KONFIGURIEREN EINER ANORDNUNG ZUM SCHÜTZEN, STEUERN ODER ÜBERWACHEN EINER ELEKTRISCHEN SCHALT- ODER ENERGIEVERSORGUNGSANLAGE**
METHOD FOR CONFIGURING AN ARRANGEMENT FOR PROTECTING CONTROLLING OR MONITORING AN ELECTRICAL SWITCH OR POWER SUPPLY GEAR
PROCÉDÉ DE CONFIGURATION D'UN ENSEMBLE DESTINÉ À PROTÉGER, À COMMANDER OU À SURVEILLER UNE INSTALLATION D'ALIMENTATION EN ÉNERGIE ÉLECTRIQUE OU DE COMMUTATION ÉLECTRIQUE

(43) Veröffentlichungstag der Anmeldung: 23.06.2010
(73) Patentinhaber: Siemens Aktiengesellschaft, 80333 München (DE)
(72) Erfinder: DUFAURE, Thierry, 12053 Berlin (DE)
(86) Internationale Anmeldenummer: PCT/EP2007/009160
(87) Internationale Veröffentlichungsnummer: WO 2009/049656

(56) Entgegenhaltungen:
- WO-A-2006/060371
- VICTOR FLORES ET AL: "Case Study: Design and Implementation of IEC 61850 From Multiple Vendors at CFE La Venta II" CFE/SEL, 6. April 2007 (2007-04-06), Seiten 1-14, XP002469904
- CRISPINO F ET AL: "An experiment using an object-oriented standard-IEC 61850 to integrate IEDs systems in substations" TRANSMISSION AND DISTRIBUTION CONFERENCE AND EXPOSITION: LATIN AMERICA, 2004 IEEE/PES SAO PAULO, BRAZIL 8-11 NOV. 2004, PISCATAWAY, NJ, USA,IEEE, US, 8. November 2004 (2004-11-08), Seiten 22-27, XP010799829 ISBN: 0-7803-8775-9
- HOGA C ET AL: "IEC 61850: open communication in practice in substations" POWER SYSTEMS CONFERENCE AND EXPOSITION, 2004. IEEE PES NEW YORK CITY, NY, USA 10-13 OCT. 2004, PISCATAWAY, NJ, USA,IEEE, 10. Oktober 2004 (2004-10-10), Seiten 1531-1536, XP010787994 ISBN: 0-7803-8718-X
- SCHNEIDER ELECTRIC: "Sepam series 20,40,80; IEC 61850 communication" USER'S MANUAL, Mai 2007 (2007-05), Seiten 1-72, XP002469905 France

## Beschreibung

Die Erfindung bezieht sich auf ein Verfahren zum Konfigurieren einer ein Leitebenengerät und zumindest ein mit dem Leitebenengerät verbundenes Feldgerät aufweisenden Anordnung, die zum Schützen, Steuern oder Überwachen einer elektrischen Schalt- oder Energieversorgungsanlage geeignet ist, wobei eine die Konfiguration der Anordnung beschreibende Leitebenenkonfigurationsdatei erzeugt wird.

Ein solches Verfahren ist beispielsweise aus der internationalen Offenlegungsschrift WO 2006/060371 A1 bekannt.

Zum Schützen, Steuern und Überwachen von elektrischen Schalt- oder Energieversorgungsanlagen werden bekanntermaßen Stationsautomatisierungssysteme eingesetzt. Ein solches Stationsautomatisierungssystem weist Geräte, wie Feldgeräte, insbesondere Schutzgeräte, sowie zumindest ein übergeordnetes Leitebenengerät auf, wobei die Geräte zur Erfüllung ihrer Aufgaben untereinander Informationen austauschen. Zum Austausch von Informationsobjekten wird eine vorgegebene Kommunikationstechnologie mit einem Übertragungsmedium und mit einem Kommunikationsprotokoll eingesetzt. Beispielsweise kann bei Stationsautomatisierungssystemen das Kommunikationsprotokoll nach dem IEC 61850-Standard verwendet werden.

Die Kommunikation nach dem IEC 61850-Standard basiert auf dem Austausch von Informationsobjekten, die in den Datenmodellen der eingesetzten Geräte implementiert sind. Die Datenmodelle der Geräte spiegeln die Funktionen aus Sicht der verwendeten Geräte der jeweiligen Hersteller wieder. Da das Strukturieren und der Umfang der Gerätefunktionen von der jeweiligen herstellerspezifischen Funktionsimplementierung bestimmt werden, unterscheiden sich die einzelnen Datenmodelle und das daraus resultierende Adressierungsschema der zu übertragenden Informationsobjekte. Bei Geräten unterschiedlicher Hersteller unterscheiden sich somit im Allgemeinen die Adressierungsschemata, obwohl die Geräte vergleichbare Schutz- und Steuerungsfunktionen anbieten. Bei derzeit bekannten Geräten zum Schützen, Steuern und Überwachen elektrischer Schalt- oder Energieversorgungsanlagen ist es aufgrund der unterschiedlichen Adressierungsschemata von Geräten unterschiedlicher Hersteller mitunter sehr aufwendig, ein in der Anlage vorhandenes (altes) Feldgerät durch ein neues Feldgerät auszutauschen, da nämlich im Allgemeinen nicht nur das von der Änderung betroffene Feldgerät in seiner Parametrierung angepasst werden muss, sondern darüber hinaus alle anderen Geräte, die mit diesem Feldgerät Daten austauschen, nämlich deshalb, weil sich das Datenmodell des neuen Feldgeräts von dem des alten Feldgeräts im Allgemeinen unterscheiden wird.

Aus diesem Grunde erfordert ein Austausch eines Feldgeräts einer elektrischen Schalt- oder Energieversorgungsanlage in der Regel eine Vielzahl an Schritten, wie beispielsweise folgende:
- Aktualisieren der Anlagenkonfiguration in einem Systemkonfigurator zur Berücksichtigung eines geänderten Datenmodells,
- Elektrisches Freischalten aller derjenigen Felder der elektrischen Schalt- oder Energieversorgungsanlage, deren Geräte von der Neuparametrierung betroffen sind,
- Deaktivieren der Kommunikation aller Geräte, die von einer Neuparametrierung betroffen sind,
- Aktualisieren der Geräteparametrierung aller betroffenen Geräte,
- Durchführen eines Geräteneustarts aller neu parametrierten Geräte,
- Prüfen der korrekten Funktion der neu parametrierten Geräte (Schutzprüfung, Bittest, Funktionsprüfung) und
- Zuschalten der freigeschalteten Felder der Schalt- oder Energieversorgungsanlage.

Die beschriebene Austauschprozedur verursacht einen erheblichen Parametrier- und Prüfaufwand. Da der Anlagenbetrieb für die Dauer des Geräteaustauschs eingeschränkt ist, sind zusätzliche organisatorische Maßnahmen, wie z. B. das Beantragen von Freischaltterminen zum Freischalten der Schalt- oder Energieversorgungsanlage, erforderlich. Das beschriebene Freischalten von Feldern wird daher in elektrischen Übertragungsnetzen nur sehr ungern durchgeführt, so dass Freischaltungen in der Regel zumindest ein Jahr im Voraus bei der zuständigen Last-Managementstelle der betroffenen Felder angemeldet werden müssen. Auch verursachen Freischaltungen Fahrplanänderungen des Last-Managements, die im Allgemeinen zu nicht unerheblichen Ausfallkosten führen, denn im Falle einer Freischaltung reduziert sich in der Regel die Transportkapazität des Übertragungsnetzes.

Der Erfindung liegt demgemäß die Aufgabe zugrunde, ein Verfahren zum Konfigurieren einer ein Leitebenengerät und zumindest ein mit dem Leitebenengerät verbundenes Feldgerät aufweisenden Anordnung anzugeben, das im Falle eines Gerätewechsels einen möglichst geringen Aufwand erforderlich macht.

Diese Aufgabe wird ausgehend von einem Verfahren der eingangs beschriebenen Art erfindungsgemäß durch die kennzeichnenden Merkmale des Anspruchs 1 gelöst. Vorteilhafte Ausgestaltungen des erfindungsgemäßen Verfahrens sind in Unteransprüchen angegeben.

Danach ist erfindungsgemäß vorgesehen, dass nach einem Ersetzen des Feldgeräts durch ein neues Feldgerät eine neue Leitebenenkonfigurationsdatei, die die alte Leitebenenkonfigurationsdatei ersetzt und die Eigenschaften des neuen Feldgeräts berücksichtigt, und mit dieser neuen Leitebenenkonfigurationsdatei ein neuer Feldgerätparametrierdatensatz erzeugt wird, mit dem sich das neue Feldgerät automatisch parametrieren lässt, wobei aus der alten Leitebenenkonfigurationsdatei Telegrammkonfigurationsdaten extrahiert werden, die die Datentelegrammerzeugung des alten Feldgeräts beschreiben, und mit diesen Telegrammkonfigurationsdaten die neue Leitebenenkonfigurationsdatei sowie der neue Feldgerätparametrierdatensatz derart gebildet werden, dass das neue Feldgerät Datentelegramme mit einer Datentelegrammadressierung erzeugt, die mit der Datentelegrammadressierung des alten Feldgeräts übereinstimmt.

Ein wesentlicher Vorteil des erfindungsgemäßen Verfahrens ist darin zu sehen, dass bei diesem die Datentelegrammadressierung auch im Falle eines Gerätewechsels unverändert bleibt, so dass ein erfolgter Feldgerätewechsel für die übrigen Geräte keine große Bedeutung hat, weil sich das neue Feldgerät bei der Datentelegrammerzeugung genauso verhält wie das alte ausgewechselte Feldgerät.

Gemäß einer vorteilhaften Ausgestaltung des Verfahrens ist vorgesehen, dass die neue Leitebenenkonfigurationsdatei unter Heranziehung der alten Leitebenenkonfigurationsdatei sowie einer die Eigenschaften des neuen Feldgeräts beschreibenden Eigenschaftsbeschreibungsdatei des neuen Feldgeräts gebildet wird. Bei dieser Ausgestaltung des Verfahrens wird also die neue Leitebenenkonfigurationsdatei durch ein Zusammenführen zweier Eingangsdateien gebildet.

Auch wird es als vorteilhaft angesehen, wenn die alte Leitebenenkonfigurationsdatei eine SCD-Datei nach dem IEC61850-Standard ist und aus dieser die Telegrammkonfigurationsdaten extrahiert werden und wenn als neue Leitebenenkonfigurationsdatei ebenfalls eine SCD-Datei nach dem IEC61850-Standard gebildet wird. Beispielsweise wird als Eigenschaftsbeschreibungsdatei des neuen Feldgeräts eine ICD-Datei des neuen Feldgeräts nach dem IEC61850-Standard verwendet.

Gemäß einer besonders bevorzugten Ausgestaltung des Verfahrens ist vorgesehen, dass in der alten Leitebenenkonfigurationsdatei zumindest ein "General Object Oriented System Environment"-Kontrollblock, also ein "GOOSE-Kontrollblock nach dem IEC61850-Standard, identifiziert wird. In diesem Falle lässt sich beispielsweise prüfen, welchem "Logical Device"-Namen nach dem IEC61850-Standard der GOOSE-Kontrollblock in der alten Leitebenenkonfigurationsdatei zugeordnet ist. Bevorzugt wird in der neuen Leitebenenkonfigurationsdatei der entsprechende "Logical Device"-Name hinzugefügt, sofern dieser dort noch nicht vorhanden ist.

Auch wird vorzugsweise der GOOSE-Kontrollblock der alten Leitebenenkonfigurationsdatei auch in der neuen Leitebenenkonfigurationsdatei eingerichtet, und zwar unter Zuordnung zu demselben "Logical Device"-Namen, zu dem der GOOSE-Kontrollblock in der alten Leitebenenkonfigurationsdatei zugeordnet ist. Beispielsweise erfolgt das Einrichten des GOOSE-Kontrollblocks in der neuen Leitebenenkonfigurationsdatei durch Kopieren des GOOSE-Kontrollblocks der alten Leitebenenkonfigurationsdatei in die neue Leitebenenkonfigurationsdatei.

Wenn sich die Gerätefunktionsnamen des neuen Feldgeräts von denen des alten Feldgeräts unterscheiden, wird vorzugsweise innerhalb des GOOSE-Kontrollblocks der neuen Leitebenenkonfigurationsdatei der DataSet-Eintrag gemäß 61850-Standard an die Gerätefunktionsnamen des neuen Feldgeräts angepasst.

Die Gerätefunktionsnamen des alten Feldgeräts können beispielsweise aus der Leitebenenkonfigurationsdatei ausgelesen werden. Die Gerätefunktionsnamen des neuen Feldgeräts werden beispielsweise aus einer Datenbank entnommen oder von einer Bedienperson abgefragt, vorzugsweise über eine Datenverarbeitungsanlage wie einen PC oder dergleichen.

Die Zuordnung der Gerätefunktionsnamen des alten Feldgeräts zu den Gerätefunktionsnamen des neuen Feldgeräts kann beispielsweise ebenfalls der genannten Datenbank entnommen oder von der genannten Bedienperson abgefragt werden.

Die Erfindung bezieht sich außerdem auf ein Konfigurationsgerät zum Konfigurieren einer ein Leitebenengerät und zumindest ein mit dem Leitebenengerät verbundenes Feldgerät aufweisenden Anordnung zum Schützen, Steuern oder Überwachen einer elektrischen Schalt- oder Energieversorgungsanlage.

Erfindungsgemäß ist diesbezüglich vorgesehen, dass das Konfigurationsgerät geeignet ist, eine neue Leitebenenkonfigurationsdatei unter Heranziehung einer alten Leitebenenkonfigurationsdatei sowie einer die Eigenschaften des neuen Feldgeräts beschreibenden Eigenschaftsbeschreibungsdatei des neuen Feldgeräts zu bilden.

Bezüglich der Vorteile des erfindungsgemäßen Konfigurationsgeräts sei auf die obigen Ausführungen im Zusammenhang mit dem erfindungsgemäßen Verfahren verwiesen, da die Vorteile des erfindungsgemäßen Verfahrens denen des erfindungsgemäßen Konfigurationsgeräts im Wesentlichen-entsprechen.

Vorzugsweise weist das Konfigurationsgerät eine Datenverarbeitungsanlage auf, in der ein Programm installiert ist, das zum Konfigurieren einer ein Leitebenengerät und zumindest ein mit dem Leitebenengerät verbundenes Feldgerät aufweisenden Anordnung geeignet ist.

Die Erfindung bezieht sich außerdem auf ein Computerprogrammprodukt zur Installation in einem Konfigurationsgerät, wie es oben beschrieben ist.

Erfindungsgemäß ist mit dem Computerprogrammprodukt eine Datenverarbeitungsanlage derart programmierbar, dass diese zum Konfigurieren einer ein Leitebenengerät und zumindest ein mit dem Leitebenengerät verbundenes Feldgerät aufweisenden Anordnung geeignet ist.

Die Erfindung wird nachfolgend anhand von Ausführungsbeispielen näher erläutert. Dabei zeigen beispielhaft
- Figur 1: ein Ausführungsbeispiel für eine Anordnung mit Feldgeräten und einem Leitebenen-Gerät,
- Figur 2: ein Ausführungsbeispiel für ein Konfigurationsgerät zum Konfigurieren der An- ordnung gemäß der Figur 1 nach einem Austausch eines Feldgeräts,
- Figuren 3-4: jeweils ein Ausführungsbeispiel für das Erzeu- gen einer neuen Leitebenenkonfigurationsdatei mit Hilfe einer die Eigenschaften des neuen Feldgeräts beschreibenden ICD-Eigenschaftsbe- schreibungsdatei und einer alten Leitebenenkon- figurationsdatei, die die Anordnung vor dem Austausch des Feldgeräts beschreibt.

In den Figuren werden der Übersicht halber für identische oder vergleichbare Komponenten stets dieselben Bezugszeichen verwendet.

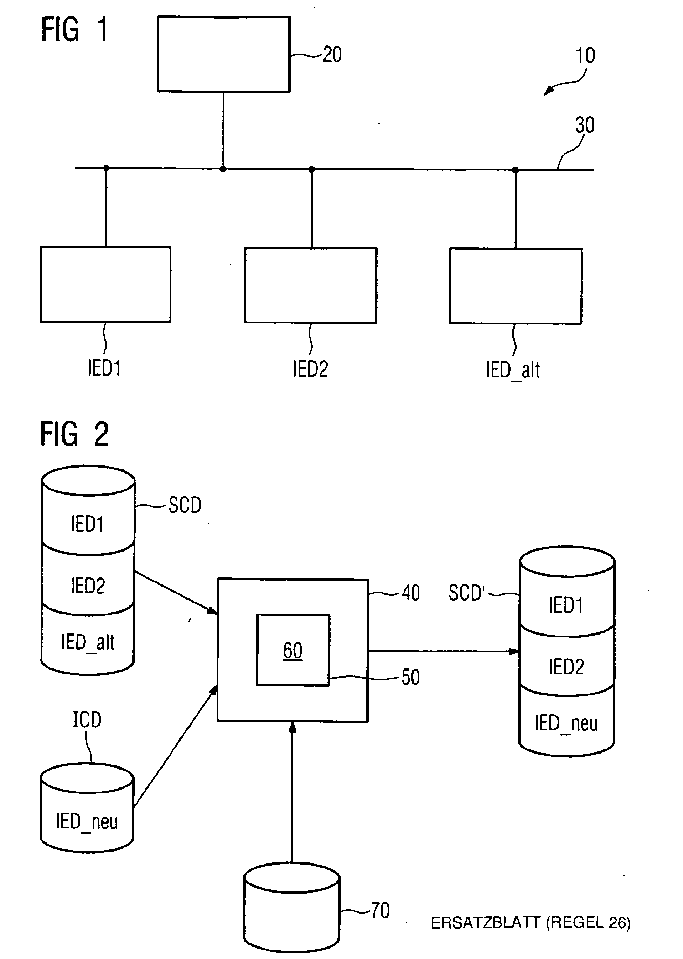

In der Figur 1 ist ein Ausführungsbeispiel für ein Stationsautomatisierungssystem 10 gezeigt, das zum Schützen, Steuern oder Überwachen einer nicht weiter dargestellten elektrischen Schalt- oder Energieversorgungsanlage geeignet ist. Das Stationsautomatisierungssystem 10 umfasst drei Feldgeräte IED1, IED2 und IED_alt, bei denen es sich beispielsweise um Schutzgeräte handeln kann, sowie ein Leitebenen-Gerät 20. Die Geräte stehen über ein Kommunikationsnetz 30 miteinander in Verbindung. Die Konfiguration der Anordnung 10 wird durch eine Leitebenenkonfigurationsdatei SCD (vgl. Fig. 2) beschrieben.

Wird nun eines der Feldgeräte, beispielsweise das Feldgerät IED_alt, durch ein neues Feldgerät IED_neu ersetzt, so muss eine neue Leitebenenkonfigurationsdatei gebildet werden, die die alte Leitebenenkonfigurationsdatei ersetzt und die Eigenschaften des neuen Feldgeräts berücksichtigt. Dies ist in der Figur 2 näher gezeigt.

In der Figur 2 erkennt man die alte Leitebenenkonfigurationsdatei SCD, die sich auf die Eigenschaften der Schutzgeräte IED1, IED2 und IED_alt bezieht. Mit dieser alten Leitebenenkonfigurationsdatei SCD sowie mit einer die Eigenschaften des neuen Feldgeräts IED_neu beschreibenden ICD-Eigenschaftsbeschreibungsdatei ICD wird eine neue Leitebenenkonfigurationsdatei SCD' gebildet. Aus dieser neuen Leitebenenkonfigurationsdatei SCD' lässt sich anschließend beispielsweise auch ein neuer Feldgerätparametrierdatensatz erzeugen, mit dem sich das neue Feldgerät IED_neu automatisch parametrieren lässt.

Zum Erzeugen der neuen Leitebenenkonfigurationsdatei SCD' ist in der Figur 2 ein Konfigurationsgerät 40 vorgesehen. Das Konfigurationsgerät 40 kann beispielsweise eine Datenverarbeitungsanlage 50 aufweisen, in der ein entsprechendes Steuer- bzw. Konfigurationsprogramm 60 installiert ist.

In der Figur 2 erkennt man außerdem eine Datenbankeinrichtung 70, aus der die Gerätefunktionsnamen des neuen Feldgeräts sowie die Zuordnung der Gerätefunktionsnamen des alten Feldgeräts zu den Gerätefunktionsnamen des neuen Feldgeräts entnommen werden können. Die Datenbankeinrichtung 70 kann einen Bestandteil des Konfigurationsgeräts 40 bilden oder eine davon separate Komponente sein.

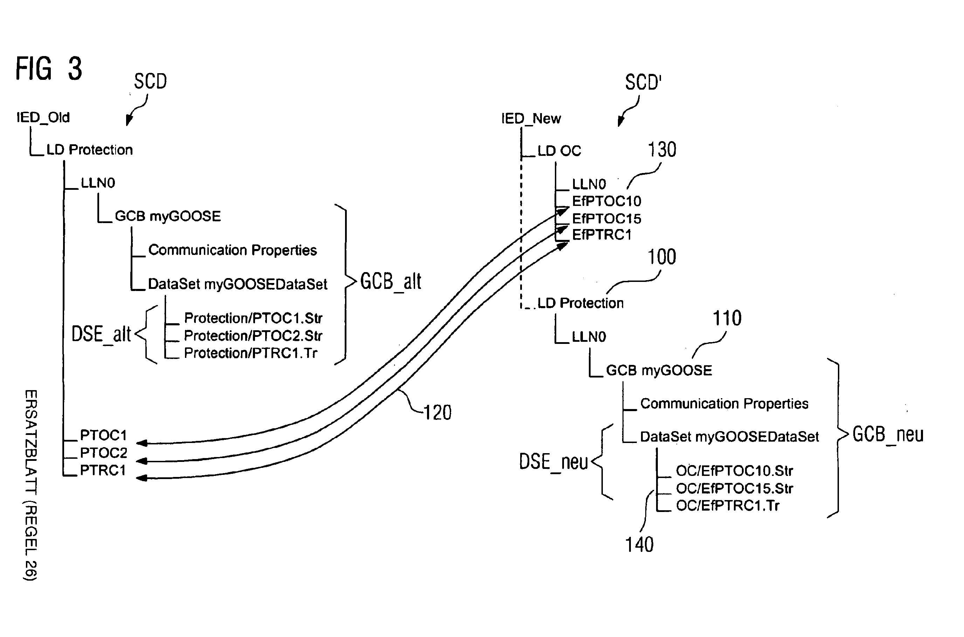

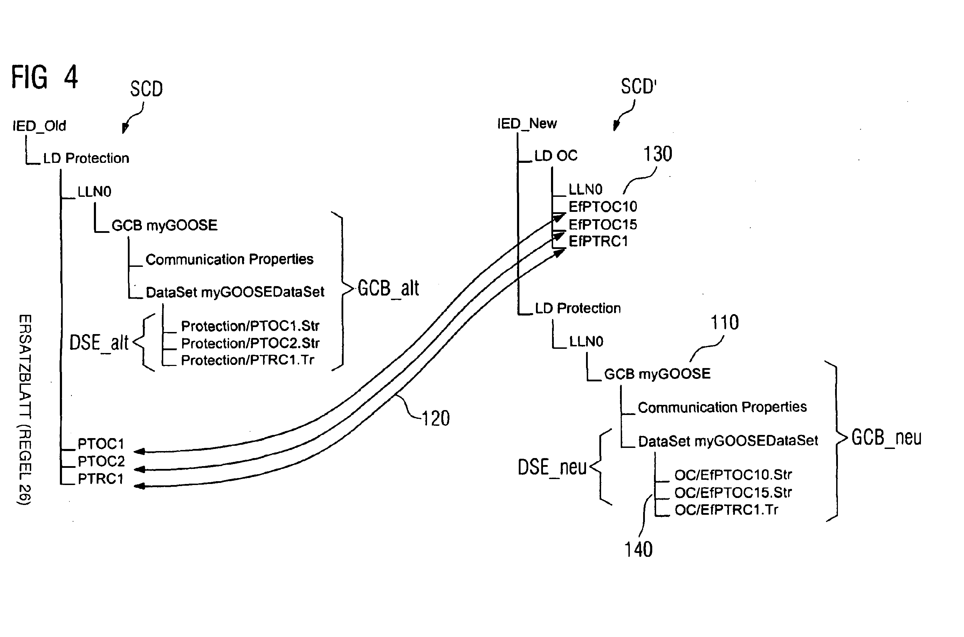

Die Funktionsweise des Konfigurationsgeräts 40 bzw. der Datenverarbeitungsanlage 50 sowie des Steuerprogramms 60 wird beispielhaft nachfolgend anhand der Figuren 3 und 4 erläutert.

In der Figur 3 sieht man einen Ausschnitt eines Ausführungsbeispiels für eine alte Leitebenenkonfigurationsdatei SCD nach dem IEC61850-Standard. Dargestellt sind ein "logical device"-Fach "LD Protection", innerhalb dessen die Gerätefunktionen als "logical nodes" definiert sind. Die Gerätefunktionen heißen bei dem Feldgerät IED_alt beispielsweise PTOC1, PTOC2 und PTRC1.

Auch erkennt man in der alten Leitebenenkonfigurationsdatei SCD einen "General Object Oriented System Environment"-Kontrollblock, kurz GOOSE-Kontrollblock genannt, GCB_alt mit einem DataSet-Eintrag DSE_alt, in dem Verweise "Protection/PTOCl.Str", "Protection/PTOC2.Str" und "Protection/PTRC1.Tr" enthalten sind, die auf die Gerätefunktionen PTOC1, PTOC2 und PTRC1 verweisen.

Das Konfigurationsgerät 40 wird nun in der alten Leitebenenkonfigurationsdatei SCD den GOOSE-Kontrollblock GCB_alt identifizieren. Außerdem wird das Konfigurationsgerät 40 prüfen, welchem "Logical Device"-Namen der GOOSE-Kontrollblock GCB_alt in der alten Leitebenenkonfigurationsdatei SCD zugeordnet ist; in diesem beispielhaften Fall ist dies der "Logical Device"-Name "Protection".

Anschließend prüft das Konfigurationsgerät 40, ob der "Logical Device"-Name "Protection" in der neuen Leitebenenkonfigurationsdatei SCD' bereits vorhanden ist, beispielsweise, weil er aus der die Eigenschaften des neuen Feldgeräts IED_neu beschreibenden ICD-Eigenschaftsbeschreibungsdatei ICD durch Kopieren entnommen worden ist. Ist dies nicht der Fall, so wird der "Logical Device"-Name "Protection" noch hinzugefügt (Schritt 100).

Nachfolgend wird der GOOSE-Kontrollblock GCB_alt der alten Leitebenenkonfigurationsdatei SCD in der neuen Leitebenenkonfigurationsdatei SCD' instanziiert, beispielsweise durch ein Kopieren des GOOSE-Kontrollblock GCB_alt, und es wird ein neuer GOOSE-Kontrollblock GCB_neu gebildet (Schritt 110).

In einem weiteren Schritt 120 prüft das Konfigurationsgerät 40, ob sich die Gerätefunktionsnamen des neuen Feldgeräts von denen des alten Feldgeräts unterscheiden. Bei dem Ausführungsbeispiel heißen die Gerätefunktionen bei dem neuen Feldgerät EfPTOC10, EfPTOC15 und EfPTRC1 und somit anders als die Gerätefunktionen PTOC1, PTOC2 und PTRC1 des alten Feldgeräts. Die Gerätefunktionsnamen EfPTOC10, EfPTOC15 und EfPTRC1 des neuen Feldgeräts können aus der Datenbank 70 gemäß der Figur 2 entnommen oder von einer Bedienperson abgefragt werden; entsprechend kann auch die Zuordnung der Gerätefunktionsnamen des alten Feldgeräts zu den Gerätefunktionsnamen des neuen Feldgeräts der Datenbank 70 entnommen oder von der Bedienperson abgefragt werden.

Die Gerätefunktionen EfPTOC10, Ef PTOC15 und EfPTRC1 werden bei dem neuen Feldgerät IED_neu beispielsweise unter einem anderen "logical device"-Namen, zum Beispiel dem "logical device"-Namen "LD OC" geführt. Demgemäß wird das Konfigurationsgerät 40 in der neuen Leitebenenkonfigurationsdatei SCD' einen entsprechenden "logical device"-Namen "LD OC" einführen und darin die Gerätefunktionen EfPTOC10, EfPTOC15 und EfPTRC1 benennen (Schritt 130).

Um die Umbenennung der Gerätefunktionen in dem GOOSE-Kontrollblock GCB_neu der neuen Leitebenenkonfigurationsdatei SCD' zu berücksichtigen, wird das Konfigurationsgerät 40 innerhalb des GOOSE-Kontrollblocks GCB_neu der neuen SCD-Datei SCD' den DataSet-Eintrag DSE_neu an die Gerätefunktionsnamen EfPTOC10, EfPTOC15 und EfPTRC1 des neuen Feldgeräts IED_neu anpassen. Dies erfolgt durch ein Ersetzen der alten Einträge "Protection/PTOCl.Str", "Protection/PTOC2.Str" und "Protection/PTRC1.Tr" durch neue Einträge "OC/EfPTOCl0.Str", "OC/EfPTOCl5.Str" und "OC/EfPTRC1.Tr", die auf die Gerätefunktionsnamen EfPTOCl0, EfPTOC15 und EfPTRC1 unter dem "logical device"-Namen "LD OC" verweisen (Schritt 140).

Mit der neuen Leitebenenkonfigurationsdatei SCD' wird nachfolgend automatisch ein Feldgerätparametrierdatensatz - nachfolgend kurz Parametrierdatensatz genannt - erzeugt, mit dem sich das neue Feldgerät IED_neu parametrieren lässt. Da in der neuen Leitebenenkonfigurationsdatei SCD' die Telegrammkonfigurationsdaten des alten ersetzten Feldgeräts IED_alt berücksichtigt worden sind, wird auch der neue Parametrierdatensatz diese alten Telegrammkonfigurationsdaten berücksichtigen und damit das neue Feldgerät IED_neu derart parametrieren, dass sich das neue Feldgerät IED_neu bezüglich der Datentelegrammadressierung genauso verhält wie seinerzeit das alte ersetzte Feldgerät IED_alt. Die Erzeugung eines Parametrierdatensatzes aus einer SCD-Datei gemäß IEC61850-Standard ist in dem genannten Standard erwähnt, so dass diesbezüglich auf diesen Standard verwiesen sei.

In der Figur 4 ist ein anderes Ausführungsbeispiel für die Funktionsweise des Konfigurationsgeräts 40 bzw. der Datenverarbeitungsanlage 50 sowie des Steuerprogramms 60 gezeigt.

Im Unterschied zu dem Ausführungsbeispiel gemäß der Figur 3 ist bei diesem Ausführungsbeispiel in der neuen Leitebenenkonfigurationsdatei SCD' das "logical device"-Fach "LD Protection" bereits vorhanden, so dass dieses nicht zusätzlich instanziiert zu werden braucht. Der Schritt 100 des Instanziierens des "logical device"-Fachs "LD Protection" (vgl. Figur 3) entfällt somit ersatzlos.

Im Übrigen kann das Verfahren wie im Zusammenhang mit der Figur 3 erläutert durchgeführt werden.

## Patentansprüche

1. Verfahren zum Konfigurieren einer ein Leitebenengerät (20) und zumindest ein mit dem Leitebenengerät verbundenes Feldgerät (IED1, IED2, IED_alt) aufweisenden Anordnung (10) zum Schützen, Steuern oder Überwachen einer elektrischen Schalt- oder Energieversorgungsanlage, wobei eine die Konfiguration der Anordnung beschreibende Leitebenenkonfigurationsdatei (SCD) erzeugt wird,
**dadurch gekennzeichnet, dass**
- nach einem Ersetzen des Feldgeräts (IED_alt) durch ein neues Feldgerät (IED_neu) eine neue Leitebenenkonfigurationsdatei (SCD'), die die alte Leitebenenkonfigurationsdatei ersetzt und die Eigenschaften des neuen Feldgeräts berücksichtigt, und mit dieser neuen Leitebenenkonfigurationsdatei ein neuer Feldgerätparametrierdatensatz erzeugt wird, mit dem sich das neue Feldgerät parametrieren lässt,
- wobei aus der alten Leitebenenkonfigurationsdatei Telegrammkonfigurationsdaten extrahiert werden, die die Datentelegrammerzeugung des alten Feldgeräts beschreiben, und
- mit diesen Telegrammkonfigurationsdaten die neue Leitebenenkonfigurationsdatei sowie der neue Feldgerätparametrierdatensatz derart gebildet werden, dass das neue Feldgerät Datentelegramme mit einer Datentelegrammadressierung erzeugt, die mit der Datentelegrammadressierung des alten Feldgeräts übereinstimmt.

2. Verfahren nach Anspruch 1,
**dadurch gekennzeichnet, dass**
die neue Leitebenenkonfigurationsdatei unter Heranziehung der alten Leitebenenkonfigurationsdatei sowie einer die Eigenschaften des neuen Feldgeräts beschreibenden Eigenschaftsbeschreibungsdatei (ICD) des neuen Feldgeräts gebildet wird.

3. Verfahren nach einem der voranstehenden Ansprüche, **dadurch gekennzeichnet,**
- **dass** die alte Leitebenenkonfigurationsdatei eine SCD-Datei nach dem IEC61850-Standard ist und aus dieser die Telegrammkonfigurationsdaten extrahiert werden und
- **dass** als neue Leitebenenkonfigurationsdatei ebenfalls eine SCD-Datei nach dem IEC61850-Standard gebildet wird.

4. Verfahren nach einem der voranstehenden Ansprüche 2-3,
**dadurch gekennzeichnet,**
als Eigenschaftsbeschreibungsdatei des neuen Feldgeräts eine ICD-Datei des neuen Feldgeräts nach dem IEC61850-Standard verwendet wird.

5. Verfahren nach einem der voranstehenden Ansprüche 3-4,
**dadurch gekennzeichnet, dass**
in der alten SCD-Datei zumindest ein "General Object Oriented System Environment"-Kontrollblock, also ein "GOOSE-Kontroll-block (GCB_alt) nach dem IEC61850-Standard, identifiziert wird.

6. Verfahren nach Anspruch 5,
**dadurch gekennzeichnet, dass**
geprüft wird, welchem "Logical Device"-Namen nach dem IEC61850-Standard der GOOSE-Kontrollblock in der alten SCD-Datei zugeordnet ist.

7. Verfahren nach Anspruch 6,
**dadurch gekennzeichnet, dass**
in der neuen SCD-Datei der entsprechende "Logical Device"-Name hinzugefügt wird, sofern dieser dort noch nicht vorhanden ist.

8. Verfahren nach einem der voranstehenden Ansprüche 6-7,
**dadurch gekennzeichnet, dass**
der GOOSE-Kontrollblock der alten SCD-Datei auch in der neuen SCD-Datei eingerichtet wird, und zwar unter Zuordnung zu demselben "Logical Device"-Namen, zu dem der GOOSE-Kontrollblock in der alten SCD-Datei zugeordnet ist.

9. Verfahren nach Anspruch 8,
**dadurch gekennzeichnet, dass**
das Einrichten des GOOSE-Kontrollblocks in der neuen SCD-Datei durch Kopieren des GOOSE-Kontrollblocks der alten SCD-Datei in die neue SCD-Datei erfolgt.

10. Verfahren nach einem der voranstehenden Ansprüche 5-9,
**dadurch gekennzeichnet, dass**
innerhalb des GOOSE-Kontrollblocks der neuen SCD-Datei der DataSet-Eintrag (DSE_neu) gemäß 61850-Standard an die Gerätefunktionsnamen des neuen Feldgeräts angepasst wird, wenn sich die Gerätefunktionsnamen des neuen Feldgeräts von denen des alten Feldgeräts unterscheiden.

11. Verfahren nach Anspruch 10,
**dadurch gekennzeichnet, dass**
- die Gerätefunktionsnamen (PTOC1, PTOC2 PTRC1) des alten Feldgeräts aus der SCD-Datei ausgelesen werden,
- die Gerätefunktionsnamen (EfPTOC10, EfPTOC15, EfPTRC1) des neuen Feldgeräts aus einer Datenbank (70) entnommen oder von einer Bedienperson abgefragt werden,
- die Zuordnung der Gerätefunktionsnamen des alten Feldgeräts zu den Gerätefunktionsnamen des neuen Feldgeräts der Datenbank entnommen oder von der Bedienperson abgefragt wird und
- innerhalb des GOOSE-Kontrollblocks der neuen SCD-Datei der DataSet-Eintrag an die zugeordneten neuen Gerätefunktionsnamen angepasst wird.

12. Konfigurationsgerät (40) zum Durchführen des Verfahrens nach einem der Ansprüche 1-11,
**dadurch gekennzeichnet, dass**
das Konfigurationsgerät geeignet ist, eine neue Leitebenenkonfigurationsdatei (SCD') unter Heranziehung einer alten Leitebenenkonfigurationsdatei (SCD) sowie einer die Eigenschaften des neuen Feldgeräts beschreibenden Eigenschaftsbeschreibungsdatei (ICD) des neuen Feldgeräts zu bilden.

13. Konfigurationsgerät nach Anspruch 12,
**dadurch gekennzeichnet, dass**
dieses eine Datenverarbeitungsanlage (50) aufweist, in der ein Programm (60) installiert ist, das zum Erzeugen der neuen Leitebenenkonfigurationsdatei (SCD') geeignet ist.

14. Computerprogrammprodukt zur Installation in einem Konfigurationsgerät nach Anspruch 13,
**dadurch gekennzeichnet, dass**
mit dem Computerprogrammprodukt eine Datenverarbeitungsanlage (50) derart programmierbar ist, dass diese eine neue Leitebenenkonfigurationsdatei (SCD') unter Heranziehung einer alten Leitebenenkonfigurationsdatei (SCD) sowie einer die Eigenschaften des neuen Feldgeräts beschreibenden Eigenschaftsbeschreibungsdatei (ICD) des neuen Feldgeräts bilden kann.

## Claims

1. Method for configuring an arrangement (10) which has a command level device (20) and at least one field device (IED1, IED2, IED old) connected to the command level device and is intended to protect, control or monitor an electrical switchgear or power supply system, a command level configuration file (SCD) which describes the configuration of the arrangement being generated,
**characterized in that**
- after the field device (IED old) has been replaced with a new field device (IED_new), a new command level configuration file (SCD') which replaces the old command level configuration file and takes into account the properties of the new field device is generated and this new command level configuration file is used to generate a new field device parameterization data record which can be used to parameterize the new field device,
- message configuration data which describe the data message generation by the old field device being extracted from the old command level configuration file, and
- these message configuration data being used to form the new command level configuration file and the new field device parameterization data record in such a manner that the new field device generates data messages with data message addressing which corresponds to the data message addressing of the old field device.

2. Method according to Claim 1,
**characterized in that**
the new command level configuration file is formed using the old command level configuration file and a property description file (ICD) for the new field device, which property description file describes the properties of the new field device.

3. Method according to one of the preceding claims, **characterized in that**
- the old command level configuration file is an SCD file according to the IEC 61850 standard and the message configuration data are extracted from this file, and
- **in that** an SCD file according to the IEC 61850 standard is likewise formed as the new command level configuration file.

4. Method according to one of the preceding Claims 2-3,
**characterized in that**
an ICD file for the new field device according to the IEC 61850 standard is used as the property description file for the new field device.

5. Method according to one of the preceding Claims 3-4,
**characterized in that**
at least one "General Object Oriented System Environment" control block, that is to say a "GOOSE" control block (GCB_old) according to the IEC 61850 standard, is identified in the old SCD file.

6. Method according to Claim 5,
**characterized in that**
a check is carried out in order to determine which "Logical Device" name according to the IEC 61850 standard the GOOSE control block in the old SCD file is assigned to.

7. Method according to Claim 6,
**characterized in that**
the corresponding "Logical Device" name is added to the new SCD file if it is not yet present in the latter.

8. Method according to one of the preceding Claims 6-7,
**characterized in that**
the GOOSE control block of the old SCD file is also set up in the new SCD file, to be precise with assignment to the same "Logical Device" name to which the GOOSE control block in the old SCD file is assigned.

9. Method according to Claim 8,
**characterized in that**
the GOOSE control block is set up in the new SCD file by copying the GOOSE control block from the old SCD file to the new SCD file.

10. Method according to one of the preceding Claims 5-9,
**characterized in that**
the data set entry (DSE_new) according to the 61850 standard is adapted to the device function names of the new field device inside the GOOSE control block of the new SCD file if the device function names of the new field device differ from those of the old field device.

11. Method according to Claim 10,
**characterized in that**
- the device function names (PTOC1, PTOC2, PTRC1) of the old field device are read from the SCD file,
- the device function names (EfPTOC10, EfPTOC15, EfPTRC1) of the new field device are taken from a database (70) or are requested from an operator,
- the assignment of the device function names of the old field device to the device function names of the new field device is taken from the database or is requested from the operator, and the data set entry is adapted to the assigned new device function names inside the GOOSE control block of the new SCD file.

12. Configuration device (40) for carrying out the method according to one of Claims 1-11,
**characterized in that**
the configuration device is suitable for forming a new command level configuration file (SCD') using an old command level configuration file (SCD) and a property description file (ICD) for the new field device, which property description file describes the properties of the new field device.

13. Configuration device according to Claim 12,
**characterized in that**
said configuration device has a data processing system (50) in which a program (60) which is suitable for generating the new command level configuration file (SCD') is installed.

14. Computer program product for installation in a configuration device according to Claim 13,
**characterized in that**
the computer program product can be used to program a data processing system (50) in such a manner that the latter can form a new command level configuration file (SCD') using an old command level configuration file (SCD) and a property description file (ICD) for the new field device, which property description file describes the properties of the new field device.

## Revendications

1. Procédé de configuration d'un dispositif (10), qui comprend un appareil (20) de plan de conduite et au moins un appareil (IED1, IED2, IED_alt) de terrain, qui est relié à l'appareil de plan de conduite et qui est destiné à la protection, à la commande ou au contrôle d'une installation de distribution ou d'alimentation en énergie électrique, dans lequel on produit un fichier (SCD) de configuration de plan de conduite, décrivant la configuration du dispositif, **caractérisé en ce que**
- après un remplacement de l'appareil (IED_alt) de terrain par un nouvel appareil (IED neu) de terrain, on produit un nouveau fichier (SCD') de configuration de plan de conduite, qui remplace l'ancien fichier de configuration de plan de conduite et qui tient compte des propriétés du nouvel appareil de terrain, et on produit avec ce nouveau fichier de configuration de plan de conduite, un nouveau jeu de données de paramétrisation d'appareils de terrain, par lequel le nouvel appareil de terrain peut être paramétré,
- dans lequel on extrait, de l'ancien fichier de configuration de plan de conduite, des données de configuration de télégrammes, qui décrivent la production de télégrammes de données de l'ancien appareil de terrain et,
- par ces données de configuration de télégrammes, on forme le nouveau fichier de configuration de plan de conduite, ainsi que le nouveau jeu de données de paramétrisation d'appareils de terrain, de manière à ce que le nouvel appareil de terrain produise des télégrammes de données ayant un adressage de télégrammes de données qui coïncide avec l'adressage de télégrammes de données de l'ancien appareil de terrain.

2. Procédé suivant la revendication 1,
**caractérisé en ce que**
on forme le nouveau fichier de configuration de plan de conduite, en tirant partie de l'ancien fichier de configuration de plan de conduite, ainsi que d'un fichier (ICD) du nouvel appareil de terrain décrivant les propriétés du nouvel appareil de terrain.

3. Procédé suivant l'une des revendications précédentes,
**caractérisé**
- **en ce que** l'ancien fichier de configuration de plan de conduite est un fichier SCD suivant la norme IEC61850 et on en extrait les données de configuration de télégrammes et
- **en ce que** l'on forme comme nouveau fichier de configuration de plan de conduite, également un fichier SCD suivant la norme IEC61850.

4. Procédé suivant l'une des revendications 2 ou 3,
**caractérisé en ce que**
l'on utilise comme fichier de description de propriétés du nouvel appareil de terrain, un fichier ICD du nouvel appareil de terrain suivant la norme IEC61850.

5. Procédé suivant l'une des revendications 3 ou 4,
**caractérisé en ce que**
on identifie, dans l'ancien fichier SCD, au moins un bloc de commande « General Object Oriented System Environment », donc un bloc de contrôle « GOOSE-Kontroll-block (GCB_alt) suivant la norme IEC61850.

6. Procédé suivant la revendication 5,
**caractérisé en ce qu'**on contrôle à quel nom « Logical Device » suivant la norme IEC61850 le bloc de contrôle GOOSE dans l'ancien fichier SCD est affecté.

7. Procédé suivant la revendication 6,
**caractérisé en ce que**
l'on ajoute au nouveau fichier SCD le nom « Logical Device » correspondant, dans la mesure où celui-ci n'y est pas encore.

8. Procédé suivant l'une des revendications précédentes 6 à 7,
**caractérisé en ce que**
l'on établit le bloc de contrôle GOOSE de l'ancien fichier SCD, également dans le nouveau fichier SCD et cela en l'affectant au même nom « Logical Device », auquel le bloc de contrôle GOOSE est affecté dans l'ancien fichier SCD.

9. Procédé suivant la revendication 8,
**caractérisé en ce que**
l'on établit le bloc de contrôle GOOSE dans le nouveau fichier SCD, en copiant le bloc de contrôle GOOSE de l'ancien fichier SCD dans le nouveau fichier SCD.

10. Procédé suivant l'une des revendications précédentes 5 à 9,
**caractérisé**
**en ce qu'**à l'intérieur du bloc de contrôle GOOSE du nouveau fichier SCD, on adapte l'entrée DataSet (DES_neu) suivant la norme 61850 aux noms de fonction d'appareils du nouvel appareil de terrain, si les noms de fonction d'appareil du nouvel appareil de terrain diffèrent de ceux de l'ancien appareil de terrain.

11. Procédé suivant la revendication 10,
**caractérisé en ce que**
- on lit les noms (PTOC1, PTOC2, PTRC1) de fonction d'appareil de l'ancien appareil de terrain dans le fichier SCD,
- on prélève les noms (EfPTOC10, EfPTOC15, EfPTRC1) de fonction d'appareil du nouvel appareil de terrain dans une base (70) de données ou on les fait demander par une personne de service,
- on prélève de la base de données l'affectation des noms de fonction d'appareil de l'ancien appareil de terrain aux noms de fonction d'appareil du nouvel appareil de terrain ou on la fait demander par une personne de service et
- on adapte, à l'intérieur du bloc de contrôle GOOSE du nouveau fichier SCD, l'entrée DataSet aux nouveaux noms de fonction d'appareils affectés.

12. Appareil (40) de configuration pour effectuer les procédés suivant l'une des revendications 1 à 11,
**caractérisé en ce que**
l'appareil de configuration est propre à former un nouveau fichier (SCD') de configuration de plan de conduite, en tirant parti d'un ancien fichier SCD de configuration de plan de conduite, ainsi que d'un ficher (ICD) du nouvel appareil de terrain décrivant les propriétés du nouvel appareil de terrain.

13. Appareil de configuration suivant la revendication 12,
**caractérisé en ce que**
celui-ci comporte une installation (50) de traitement de données, dans laquelle est installé un programme (60), qui convient à la production du nouveau fichier (SCD') de configuration de plan de conduite.

14. Produit de programme informatique à installer dans un appareil de configuration suivant la revendication 13,
**caractérisé en ce que**
par le produit de programme informatique, une installation (50) de traitement de données peut être programmée, de façon à ce que celle-ci puisse former un nouveau fichier (SCD') de configuration de plan de conduite, en tirant parti d'un ancien fichier SCD de configuration de plan de conduite, ainsi que d'un ficher (ICD) du nouvel appareil de terrain décrivant les propriétés du nouvel appareil de terrain.
